Europäisches Patentamt

European Patent Office

Office européen des brevets

(11) Publication number: **0 090 511**
**B1**

## (12) EUROPEAN PATENT SPECIFICATION

(45) Date of publication of patent specification: **14.05.86**

(51) Int. Cl.⁴: **F 16 D 65/52**

(21) Application number: **83301181.0**

(22) Date of filing: **04.03.83**

(54) Automatic adjuster for internal shoe drum brakes.

(30) Priority: **16.03.82 GB 8207654**

(43) Date of publication of application:
**05.10.83 Bulletin 83/40**

(45) Publication of the grant of the patent:
**14.05.86 Bulletin 86/20**

(84) Designated Contracting States:
**DE FR IT**

(56) References cited:
**FR-A-2 222 900**
**FR-A-2 397 566**
**GB-A-1 084 413**
**GB-A-1 443 352**

(73) Proprietor: **AUTOMOTIVE PRODUCTS PUBLIC LIMITED COMPANY**
**Tachbrook Road**
**Leamington Spa Warwickshire CV31 3ER (GB)**

(72) Inventor: **Charles, John Michael**
**53A Castle Lane**
**Hadleigh Essex (GB)**

(74) Representative: **Adkins, Michael et al**
**Withers & Rogers 4 Dyer's Buildings**
**Holborn London, EC1N 2JT (GB)**

Courier Press, Leamington Spa, England.

## Description

The invention relates to internal shoe drum brakes of the kind having an automatic adjuster on at least one brake shoe, the adjuster comprising an adjusting lever having a pivotal connection to the shoe, a spring-loaded toothed pawl which co-operates with ratchet teeth formed on the lever and abutment means which co-operates with the adjusting lever to limit return movement of the brake shoe during brake operation.

Such a drum brake is described in British Patent Specification No. 1,084,413. This specification shows a leading and trailing shoe hydraulic brake with mechanical actuation provided by a lever and a cross-strut, the cross-strut co-operating with the adjusting lever which is pivotally mounted on one brake shoe and acting as the abutment means which limits return movement of both brake shoes.

Brakes of the foregoing kind have been made in large numbers and generally function well. However, a problem associated with such a brake is that the teeth on the pawl tend to wear in one place. This is due to the fact that the same few teeth on the pawl engage, over the range of adjustment consecutive fresh teeth on the adjusting lever and the wear on those few pawl teeth is relatively great. An object of the present invention is to provide an internal shoe drum brake intended to mitigate the foregoing problem.

According to the invention there is provided an internal shoe drum brake assembly having an automatic adjuster on at least one brake shoe which is resiliently biased for retraction from the drum, the adjuster comprising an adjusting lever pivotally connected to said one brake shoe, a spring loaded pawl having a row of teeth, said pawl also being pivotally connected to said one brake shoe and being co-operable with ratchet teeth formed on a curved face of the adjusting lever to permit rotation of the adjusting lever relative to the pawl in one direction only, abutment means which co-operates with the adjusting lever to limit return movement of said one brake shoe during operation and means which acts on the adjusting lever to rotate the adjusting lever in the direction permitted by the pawl and ratchet teeth to take up excessive clearance between said one shoe and the brake drum in response to wear of the shoe lining, characterised in that the face on the adjusting lever describes a curve of changing radial distance from the axis of the pivotal connection of the adjusting lever. With such an arrangement, teeth on the adjusting lever, will at one end of the range of brake adjustment, interengage pawl teeth over one section of the row, and at the other end of the adjustment range will engage pawl teeth further along the row. In that manner, the likelihood of a small number of the pawl teeth being subject to excessive wear compared to the remainder is substantially reduced.

Preferably the curved face on the adjusting lever describes an arc struck from a point offset from the axis of the pivotal connection of the adjusting lever. In such a case, the point about which the arc is struck may be between the axis of the pivotal connection of the adjusting lever and an actuator for the brake shoes. The arc struck about the said point preferably intersects an arc struck about the axis of the pivotal connection of the adjusting lever at one end of the curved face of the adjusting lever.

Preferably, the row of teeth on the pawl is formed on a curved face which describes a curve of changing radial distance from the axis of the pivotal connection of the pawl. In that case the curved face on the pawl may describe a further arc struck about a pivot point offset from the axis of the pivotal connection of the pawl. The pawl is preferably arranged between the adjusting lever and the point about which the further arc is struck.

A brake assembly in accordance with the invention will now be described by way of example with reference to the accompanying drawings in which:

Fig. 1 is a known brake assembly which is a variant of the type subject of British Patent No. 1,084,413,

Fig. 2 illustrates part of a brake assembly in accordance with the invention, and

Figs. 3 and 4 illustrate the relative positions of the pawl and adjusting lever in two different operating positions of the Fig. 2 brake assembly.

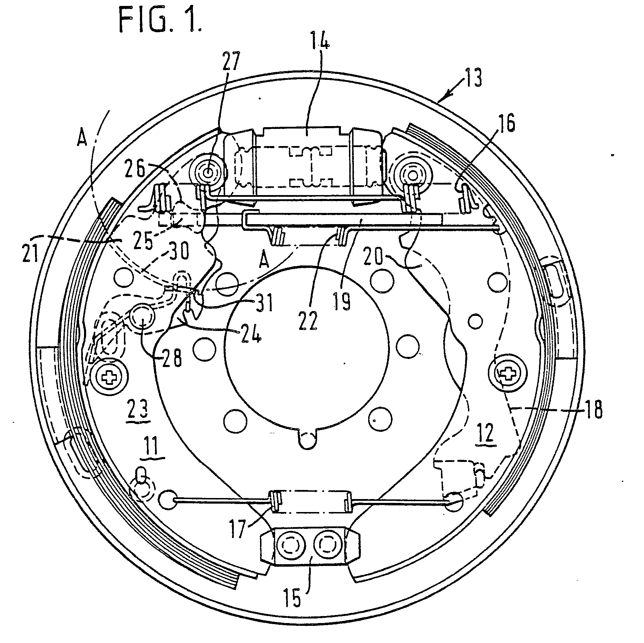

Referring to Fig. 1 a drum brake assembly comprises a pair of brake shoes 11 and 12 mounted on a back plate 13. A double ended hydraulic wheel cylinder 14 is located between one pair of adjacent ends of the shoes 11 and 12 and an abutment 15 is located between the other pair of adjacent ends. A pair of pull-off springs 16 and 17 act to pull the brake shoes away from the brake drum (not shown).

A hand brake lever 18 is pivoted to the one end of the shoe 12. A strut 19 extends between the two shoes 11 and 12 at the end portions thereof adjacent the wheel cylinder 14. Each end portion of the strut 19 has a slot therein, one of the slots for receiving the hand brake lever 18 and the web 20 of the brake shoe 12, and the other slot for receiving the web 23 of the other brake shoe 11 and an adjusting lever 21. The strut is biased against the shoe 12 and lever 18 by a spring 22.

The adjusting lever 21 is located behind the web 23 of the brake shoe 11 and has one end pivotally connected thereto by a pin 27. The free end of adjusting lever 21 has an arcuate face which describes an arc A—A struck about the axis of pin 27. The arcuate face has ratchet teeth 30 which engage with teeth 31 on a spring loaded pawl 24, pivotally connected to the shoe web 23 by a pin 28. The strut 19 has a projection 25 thereon that extends into an aperture 26 in the adjusting lever 21. The projection 25 loosely engages in the aperture 26 to form a lost motion connection which provides for the normal service clearance between the brake shoe linings and the drum.

In operation of the brake, the spring 22 always biases the strut towards the web 20 of shoe 12. If there is excessive clearance between the shoe linings and the drum then when the shoes move apart on application of the brakes, the lost motion connection between the strut 19 and the adjusting lever 21 is taken up and then the projection 25 on the strut will cause the adjusting lever 21 to pivot anti-clockwise relative to the shoe. The spring loaded pawl 24 will allow the adjusting lever 21 to pivot anti-clockwise to take up the excess clearance at the end of the strut, but not clockwise and therefore adjust the shoe to drum clearance.

A problem associated with such a prior known brake drum assembly is that the same few teeth on the pawl tend to engage, over the range of adjustment, consecutive fresh teeth on the adjusting lever which causes the pawl teeth to wear relatively quickly.

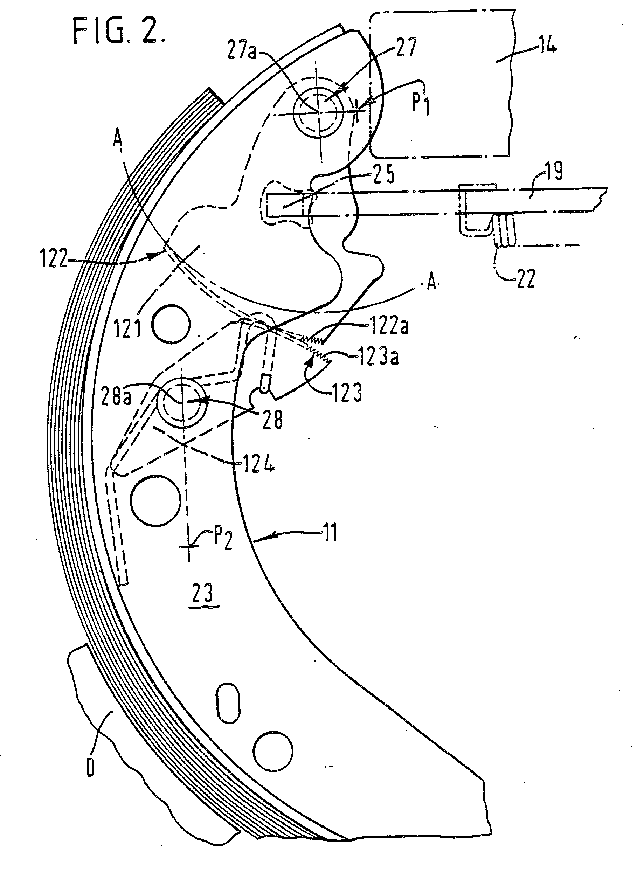

Referring now to Fig. 2 the same reference numerals will be used as in Fig. 1 for the same components. The brake shoe 11 has an adjusting lever 121 pivotally connected by a pin 27 having an axis 27a to the web 23 at the one end of the shoe. The adjusting lever 121 has a curved ratchet face 122 the teeth 122a of which engage like teeth 123a on a curved face 123 of a spring loaded pawl 124. The pawl 124 is pivotally connected to the web 23 by a pin 28.

The ratchet face 122 describes an arc which is struck from a point $P_1$ offset from the axis 27a of pivot 27 towards the actuator 14. This has the effect of producing a ratchet face having a curve thereon which describes a path of smoothly changing radial distance from axis 27a in an anti-clockwise direction. The curve A—A, which passes through the root of the teeth on the outer end of the ratchet, is an arc struck from the axis 27a and it can be seen that the ratchet face 122 on the arc struck from $P_1$ passes through the root of the teeth and intersects the curve A—A at the outer end of the ratchet (the term "outer end" of the ratchet is "outer" with respect to the radial distance from the centre of the brake assembly).

The pawl 24 has a row of teeth 123a which lie on a curved face 123 which describes an arc of the same radius as the arc described by the face 122 on the adjusting lever 121. The arc described by face 123 is struck from a point $P_2$ offset from an axis 28a of a pivot pin 128 for the pawl.

In operation, the spring 22 always biases the strut 19 towards the shoe 12 (not shown in Fig. 2). When, as a result of excess clearance between the shoes and a drum D, the adjusting lever 121 is pivoted anti-clockwise to ride over the teeth of pawl 24, the pawl rotates slightly anticlockwise due to the curve of the ratchet face on the adjusting lever 121.

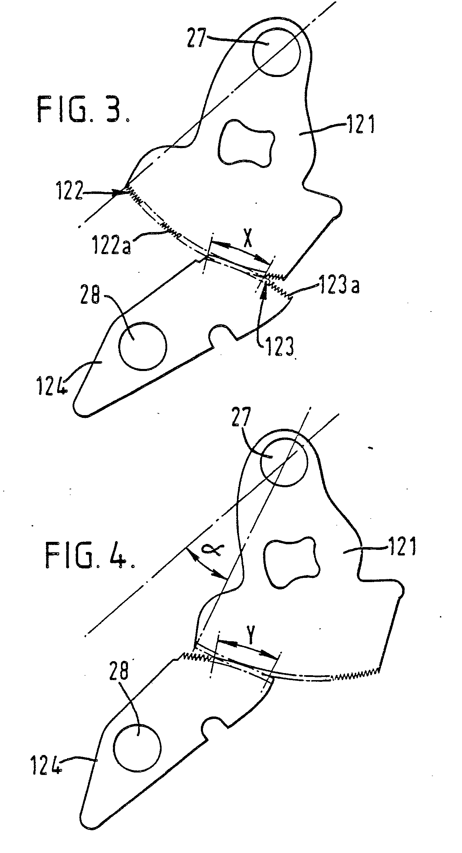

Figs. 3 and 4 illustrate the relative positions of the adjusting lever and pawl after the adjusting lever has moved incrementally from the Fig. 1 position (as shown in Fig. 3) through an angle α. In Fig. 3 the teeth on the adjusting lever 121 engage the pawl teeth over row section X and in Fig. 4 over row section Y. Therefore the teeth on the adjusting lever 121 do not engage the same few teeth on the pawl 124 throughout the range of adjustment thereby reducing wear and risk of damage to the adjustment mechanism.

## Claims

1. An internal shoe drum brake assembly having an automatic adjuster on at least one brake shoe (11) which is resiliently biased for retraction from the drum (D), the adjuster comprising an adjusting lever (121) pivotally connected to said one brake shoe (11), a spring loaded pawl (124) having a row of teeth (123a), said pawl also being pivotally connected to said one brake shoe (11) and being co-operable with ratchet teeth (122a) formed on a curved face (122) of the adjusting lever (121) to permit rotation of the adjusting lever relative to the pawl in one direction only, abutment means (19) which co-operates with the adjusting lever to limit return movement of said one brake shoe during operation and means (25) which acts on the adjusting lever to rotate the adjusting lever in the direction permitted by the pawl and ratchet teeth to take up excessive clearance between said one shoe (11) and the brake drum (D) in response to wear of the shoe lining, characterised in that the face (122) on the adjusting lever (121) describes a curve of changing radial distance from the axis of the pivotal connection (27) of the adjusting lever.

2. An assembly according to claim 1 characterised in that the curved face (122) of the adjusting lever (121) describes an arc struck from a point ($P_1$) offset from the axis (27a) of the pivotal connection (27) of the adjusting lever.

3. An assembly according to claim 2 characterised in that the point ($P_1$) about which said arc is struck is between the axis (27a) of the pivotal connection (27) of the adjusting lever (121) and an actuator (14) for the brake shoes.

4. An assembly according to claim 2 or 3 characterised in that the arc struck about the said point ($P_1$) intersects an arc struck about the axis (27a) of the pivotal connection (27) of the adjusting lever (121) at one end of the curved face 122 of the adjusting lever.

5. An assembly according to any preceding claim characterised in that the row of teeth (123a) on the pawl is formed on a face (123) which describes a curve of changing radial distance from the axis (28a) of the pivotal connection (28) of the pawl.

6. An assembly according to claim 5 characterised in that the curved face (123) on the pawl (124) describes a further arc struck about a point ($P_2$) offset from the axis (28a) of the pivotal connection (28) of the pawl (124).

7. An assembly according to claim 6 characterised in that the pawl (124) is arranged between the adjusting lever (121) and the point ($P_2$) about which the further arc is struck.

## Patentansprüche

1. Innenbacken-Trommelbremsanordnung mit einer selbsttätigen Nachstellvorrichtung an mindestens einer Bremsbacke (11), die für den Rückzug von der Trommel (D) federnd vorgespannt ist, wobei die Nachstellvorrichtung einen Nachstellhebel (121), der mit der einen Bremsbacke (11) drehbar verbunden ist, einen federbelastete Sperrklinke (124), die eine Reihe von Zähnen (123a) hat, wobei die Sperrklinke auch mit der einen Bremsbacke (11) drehbar verbunden ist und mit Sperrzähnen (122a), die an einer gekrümmten Fläche (122) des Nachstellhebels (121) gebildet sind, zusammenwirken kann, um eine Drehung des Nachstellhebels gegenüber der Sperrklinke nur in einer Richtung zu gestatten, eine Widerlagereinrichtung (19), die mit dem Nachstellhebel zusammenarbeitet, um die Rückstellbewegung der einen Bremsbacke während des Betriebs zu begrenzen, und eine Einrichtung (25) aufweist, die auf den Nachstellhebel einwirkt, um den Nachstellhebel in der durch die Sperrklinke und die Sperrzähne gestatteten Richtung zu drehen, um ein übermäßiges Spiel zwischen der einen Backe (11) und der Bremstrommel (D) infolge von Abnutzung des Backenbelags auszugleichen, dadurch gekennzeichnet, daß die Fläche (122) an dem Nachstellhebel (121) eine Kurve mit sich veränderndem radialen Abstand von der Achse der Drehverbindung (27) des Nachstellhebels beschreibt.

2. Anordnung nach Anspruch 1, dadurch gekennzeichnet, daß die gekrümmte Fläche (122) des Nachstellhebels (121) einen Bogen beschreibt, der von einem Punkt ($P_1$) aus geschlagen ist, der von der Achse (27a) der Drehverbindung (27) des Nachstellhebels ersetzt ist.

3. Anordnung nach Anspruch 2, dadurch gekennzeichnet, daß der Punkt ($P_1$), um den der Bogen geschlagen ist, zwischen der Achse (27a) der Drehverbindung (27) des Nachstellhebels (121) und einer Betätigungsvorrichtung (14) für die Bremsbacken liegt.

4. Anordnung nach Anspruch 2 oder 3, dadurch gekennzeichnet, daß der Bogen, der um den Punkt ($P_1$) geschlagen ist, einen Bogen, der um die Achse (27a) der Drehverbindung (27) des Nachstellhebels (121) an einem Ende der gekrümmten Fläche (122) des Nachstellhebels geschlagen ist, schneidet.

5. Anordnung nach irgendeinem vorhergehenden Anspruch, dadurch gekennzeichnet, daß die Reihe von Zähnen (123a) an der Sperrklinke an einer Fläche (123) gebildet ist, die eine Kurve mit sich änderndem radialen Abstand von der Achse (28a) der Drehverbindung (28) der Sperrklinke beschreibt.

6. Anordnung nach Anspruch 5, dadurch gekennzeichnet, daß die gekrümmte Fläche (123) an der Sperrklinke (124) einen weiteren Bogen beschreibt, der um einen Punkt ($P_2$) geschlagen ist, der von der Achse (28a) der Drehverbindung (28) der Sperrklinke (124) versetzt ist.

7. Anordnung nach Anspruch 6, dadurch gekennzeichnet, daß die Sperrklinke (124) zwischen dem Nachstellhebel (121) un dem Punkt ($P_2$) angeordnet ist, um den der weitere Bogen geschlagen ist.

## Revendications

1. Ensemble de frein à tambour à mâchoires internes présentant un dispositif automatique de rattrapage de jeu sur au moins une mâchoire de frein (11) qui est soumise à une sollicitation élastique pour une rétraction à partir du tambour (D), le dispositif de rattrapage de jeu comprenant un levier de rattrapage de jeu (121) relié de manière pivotante à ladite mâchoire de frein (11), un cliquet (124) chargé par ressort et présentant une rangée de dents (123a), ledit cliquet étant également relié de manière pivotante à ladite mâchoire de frein (11) et pouvant coopérer avec des dents de rochet (122a) formées sur une face incurvée (122) du levier de rattrapage de jeu (121) afin de permettre une rotation du levier de rattrapage de jeu par rapport au cliquet suivant une direction seulement, des moyens de butée (19) qui coopèrent avec le levier de rattrapage de jeu afin de limiter le mouvement de retour de ladite mâchoire de frein au cours de la manoeuvre et des moyens (25) qui agissent sur le levier de rattrapage de jeu pour faire tourner le levier de rattrapage de jeu suivant la direction permise par le cliquet et les dents de rochet afin d'absorber un jeu excessif entre ladite mâchoire (11) et le tambour de frein (D) en réponse à l'usure de la garniture de mâchoire, caractérisé en ce que la face (122) située sur le levier de rattrapage de jeu (121) décrit une courbe à distance radiale variable par rapport à l'axe de la liaison pivotante (27) du levier de rattrapage de jeu.

2. Ensemble selon la revendication 1, caractérisé en ce que la face incurvée (122) du levier de rattrapage de jeu (121) décrit un arc tracé à partir d'un point ($P_1$) décalé par rapport à l'axe (27a) de la liaison pivotante (27) du levier de rattrapage de jeu.

3. Ensemble selon la revendication 2, caractérisé en ce que le point ($P_1$) autour duquel ledit arc est tracé est situé entre l'axe (27a) de la jonction pivotante (27) du levier de rattrapage de jeu (121) et un cylindre-récepteur (14) prévu pour les mâchoires de frein.

4. Ensemble selon la revendication 2 ou 3, caractérisé en ce que l'arc tracé autour dudit point ($P_1$) recoupe un arc tracé autour de l'axe (27a) de la liaison pivotante (27) du levier de rattrapage de jeu (121), à une extrémité de la face incurvée (122) du levier de rattrapage de jeu.

5. Ensemble selon une revendication précédente quelconque, caractérisé en ce que la rangée de dents (123a) prévue sur le cliquet est formée sur une face (123) qui décrit une courbe à distance radiale variable par rapport à l'axe (28a) de la liaison pivotante (28) du cliquet.

6. Ensemble selon la revendication 5, caractérisé en ce que la face incurvée (123) prévue sur le cliquet (124) décrit un autre arc tracé autour d'un point ($P_2$) décalé par rapport à l'axe (28a) de la liaison pivotante (28) du cliquet.

7. Ensemble selon la revendication 6, caractérisé en ce que le cliquet (124) est disposé entre le levier de rattrapage de jeu (121) et le point (P₂) autour duquel est tracé l'autre arc.

# FIG. 1.

FIG. 2.

2

FIG. 3.

FIG. 4.